# EUROPEAN PATENT SPECIFICATION

(11) **EP 3 399 152 B1**
(45) Date of publication and mention of the grant of the patent: **29.01.2020**
(21) Application number: 18169823.4
(22) Date of filing: 27.04.2018
(51) Int. Cl.: F01D 9/04

(54) **TURBINE NOZZLE-TO-SHROUD INTERFACE**
SCHNITTSTELLE ZWISCHEN TURBINENDÜSE UND -UMMANTELUNG
INTERFACE BUSE VERS DÉFLECTEUR DE TURBINE

(30) Priority: 01.05.2017 US 201715583047
(43) Date of publication of application: 07.11.2018
(73) Proprietor: General Electric Company, Schenectady, NY 12345 (US)
(72) Inventor: ROBERTS, Frederic Woodrow, Greenville, SC South Carolina 29615 (US); VEDHAGIRI, Sivaraman, Greenville, SC South Carolina 28165 (US)
(74) Representative: BRP Renaud & Partner mbB Rechtsanwälte Patentanwälte Steuerberater

(56) References cited:
- EP-A1- 0 536 575
- GB-A- 2 069 064
- US-A1- 2009 110 479
- US-A1- 2012 195 742
- US-A1- 2014 147 259

## Description

### FIELD

The present disclosure generally relates to a turbine for a turbomachine. More particularly, this disclosure relates to a turbine nozzle-to-shroud interface for a turbomachine.

### BACKGROUND

A gas turbine, such as an industrial, aircraft, or marine gas turbine generally includes, in serial flow order, a compressor, a combustor and a turbine. The turbine has multiple stages with each stage including a row of turbine nozzles and an adjacent row of turbine rotor blades disposed downstream from the turbine nozzles. The turbine nozzles are held stationary within the turbine and the turbine rotor blades rotate with a rotor shaft. The various turbine stages define a hot gas path through the turbine.

During operation, the compressor provides compressed air to the combustor. The compressed air is mixed with fuel and burned in a combustion chamber defined within the combustor to produce a high velocity stream of hot gas. The hot gas flows from the combustor into the hot gas path of the turbine via a turbine inlet. As the hot gas flows through each successive stage, kinetic energy from the high velocity hot gas is transferred to the rows of turbine rotor blades, thus causing the rotor shaft to rotate and produce mechanical work.

Turbine efficiency may be reduced when some of the hot gas flowing through the turbine hot gas path is lost before it can produce work. For example, the hot gas may be ingested into cavities between turbine components such as the turbine nozzles and adjacent shrouds.

GB 2 069 064 A relates to a turbomachine stator vane mounting .

### BRIEF DESCRIPTION

Aspects and advantages of the invention are set forth below in the following description, or may be obvious from the description, or may be learned through practice of the invention.

According to one embodiment, a gas turbine according to claim 1 is herewith disclosed. Further embodiments are presented in the dependent claims.

Those of ordinary skill in the art will better appreciate the features and aspects of such embodiments, and others, upon review of the specification.

### BRIEF DESCRIPTION OF THE DRAWINGS

A full and enabling disclosure of the present invention, including the best mode thereof to one skilled in the art, is set forth more particularly in the remainder of the specification, including reference to the accompanying figures, in which:
FIG. 1 is a schematic view of an exemplary gas turbine as may incorporate various embodiments of the present disclosure;
FIG. 2 is a section view of an exemplary turbine section of a gas turbine as may incorporate various embodiments of the present disclosure;
FIG. 3 is a perspective view of an exemplary turbine nozzle as may incorporate one or more embodiments of the present disclosure; and
FIG. 4 is an enlarged view of portion of a nozzle-to-shroud interface in the turbine section of FIG. 2.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component, and the term "circumferentially" refers to the relative direction that extends around the axial centerline of a particular component.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents.

Although exemplary embodiments of the present invention will be described generally in the context of a turbine nozzle for a land based power generating gas turbine for purposes of illustration, one of ordinary skill in the art will readily appreciate that embodiments of the present invention may be applied to any style or type of gas turbine and are not limited to land based power generating gas turbines unless specifically recited in the claims.

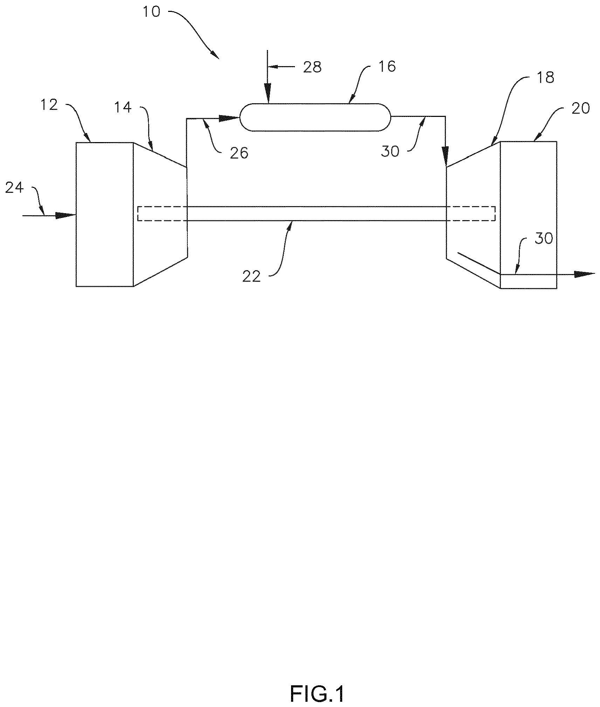

Referring now to the drawings, FIG. 1 illustrates a schematic of an exemplary gas turbine 10 as may incorporate various embodiments of the present disclosure. As shown, the gas turbine 10 generally includes an inlet section 12, a compressor 14 disposed downstream of the inlet section 12, at least one combustor 16 disposed downstream of the compressor 14, a turbine 18 disposed downstream of the combustor 16 and an exhaust section 20 disposed downstream of the turbine 18. Additionally, the gas turbine 10 may include one or more shafts 22 that couple the compressor 14 to the turbine 18.

During operation, air 24 flows through the inlet section 12 and into the compressor 14 where the air 24 is progressively compressed, thus providing compressed air 26 to the combustor 16. At least a portion of the compressed air 26 is mixed with a fuel 28 within the combustor 16 and burned to produce combustion gases 30. The combustion gases 30 flow from the combustor 16 into the turbine 18, wherein energy (kinetic and/or thermal) is transferred from the combustion gases 30 to rotor blades, thus causing shaft 22 to rotate. The mechanical rotational energy may then be used for various purposes such as to power the compressor 14 and/or to generate electricity. The combustion gases 30 exiting the turbine 18 may then be exhausted from the gas turbine 10 via the exhaust section 20.

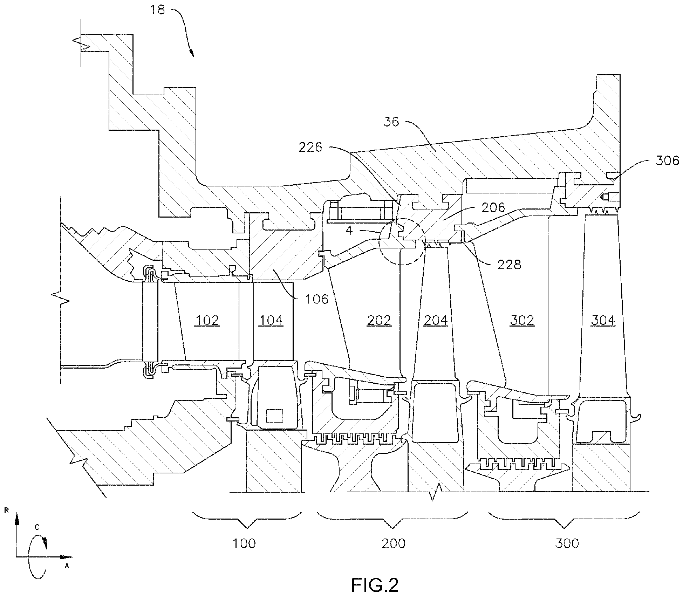

FIG. 2 illustrates a section through a portion of a gas turbine 10, such as the gas turbine 10 schematically depicted in FIG. 1. As noted in FIG. 2, the gas turbine 10 may include a central axis, e.g., along shaft 22, and the central axis of the gas turbine may define an axial direction A, a radial direction R perpendicular to the axial direction A, and a circumferential direction C which extends around the axial direction A. In particular, FIG. 2 illustrates a section view of an exemplary turbine 18 as may incorporate various embodiments of the present disclosure. As shown in FIG. 2, the turbine 18 may include multiple turbine stages. For example, the turbine 18 may include three turbine stages including a first stage 100, second stage 200 and third stage 300. The total number of turbine stages may be more or less than three and embodiments of the present invention should not be limited to three turbine stages unless otherwise recited in the claims.

As shown in FIG. 2, each stage 100, 200, 300 includes, in serial flow order, a row of turbine nozzles 102, 202 and 302 and a corresponding row of turbine rotor blades 104, 204 and 304 axially spaced along the shaft 22 (FIG. 1). A casing or shell 36 circumferentially surrounds the turbine nozzles 102, 202, and 302 and the turbine rotor blades 104, 204, and 304. The turbine nozzles 102, 202, and 302 remain stationary relative to the turbine rotor blades 104, 204, and 304 during operation of the gas turbine 10. Radially outward of each rotor blade 104, 204, and 304 is a shroud, 106, 206 and 306, respectively.

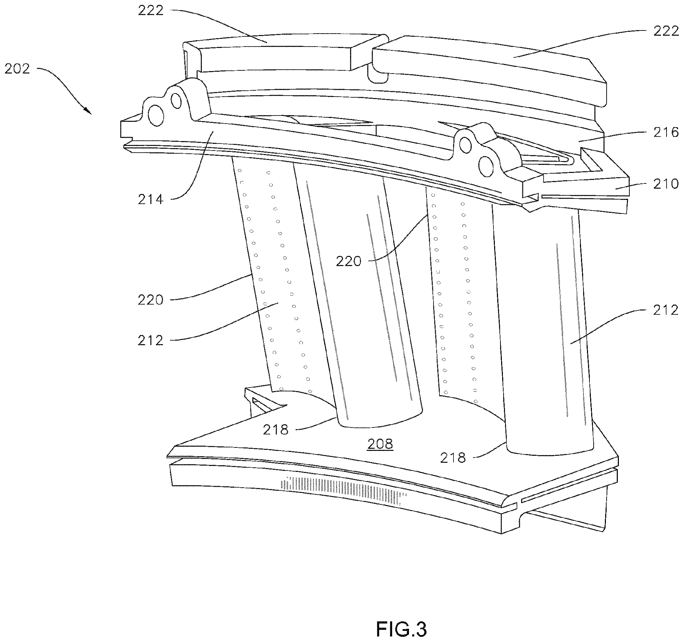

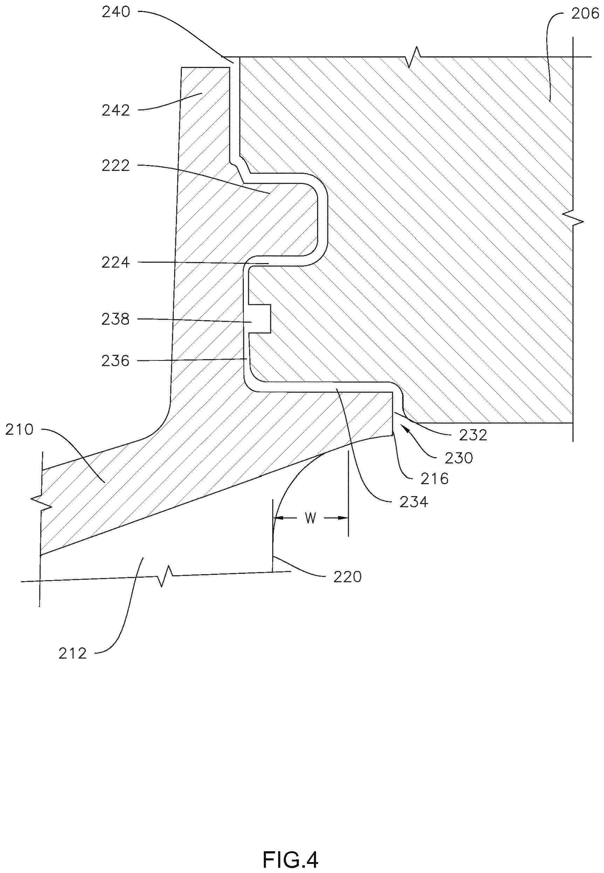

The nozzles and shrouds of each stage 100, 200, 300 may include similar features as the nozzles and shrouds of any other stage 100, 200, 300. Accordingly, for the sake of clarity, the following description will refer primarily to the second stage nozzle 202 and second stage shroud 206 by way of example, it being understood that the first stage nozzle and shroud 102 and 106, and/or the third stage nozzle and shroud 302 and 306 may include any or all of the same features or similar features. For example, shroud 206 may extend between a forward end 226 and an aft end 228. In such embodiments, the forward end 226 of the shroud 206 may be adjacent to the aft sidewall 216 (FIGS. 3 and 4) of the outer platform 210 (FIGS. 3 and 4). Additionally, similar interfaces may also or instead be provided between first stage nozzle 102 and first stage shroud 106 and/or third stage nozzle 302 and third stage shroud 306.

FIG. 3 provides a perspective view of an exemplary turbine nozzle, e.g., second-stage turbine nozzle 202 as may be incorporated into the turbine 18 as shown in FIG. 2 in various embodiments of the present disclosure. Similar features as described herein with respect to turbine nozzle 202 may correspond with or be provided in any of turbine nozzles 102, 202, 302. In the particular example illustrated in FIG. 3, the turbine nozzle may be the turbine nozzle 202 of the second stage 200, which may also be known in the industry as a stage two nozzle or S2N.

As illustrated in FIG. 3, in some embodiments the turbine nozzle 202 includes an inner platform 208 and an outer platform 210 radially spaced apart from the inner platform 208, e.g., along the radial direction R. The outer platform may extend along the axial direction A between a forward sidewall 214 and an aft sidewall 216. In the illustrated example of FIG. 3, a pair of airfoils 212 extends in span from the inner platform 208 to the outer platform 210. In this respect, the example turbine nozzle 202 illustrated in FIG. 3 is referred to in the industry as a doublet. Nevertheless, the turbine nozzle 202 may have only one airfoil 212 (i.e., a singlet), three airfoils 212 (i.e., a triplet), or a more airfoils 212. Each airfoil 212 includes a leading edge 218 at a forward end of the airfoil 212 and a trailing edge 220 at an aft end of the airfoil 212. As will be described in more detail below, the nozzle 202 may also include one or more aft hooks 222 configured to engage with the adjacent forward end 226 (FIG. 2) of the shroud 206. For example, the nozzle 202 may include an aft hook 222 corresponding to each airfoil 212, e.g., a doublet may have two aft hooks 222.

FIG. 4 provides an enlarged view of an exemplary turbine nozzle 202 and shroud 206, forming a nozzle-to-shroud interface as may be incorporated into one or more turbine stages of a turbomachine, such as the turbine 18 as shown in FIG. 2, according to various embodiments of the present disclosure. The nozzle-to-shroud interface illustrated in FIG. 4 includes a cavity 230 defined by an axial clearance between the nozzle 202 and the shroud 206. Also as illustrated in FIG. 4, the nozzle-to-shroud interface may include a sealing interface 236 within the cavity 230. The sealing interface 236 may include a seal recess 238 for receipt of a sealing element (not shown) therein. In other embodiments, the sealing interface may be defined by a close fit of the nozzle 202 and the shroud 206 without additional sealing elements. For example, the sealing interface 232 may be positioned radially outward of the outer platform 210 of the nozzle 202 and axially forward of the aft sidewall 216 of the outer platform 210 of the nozzle 202.

As is generally understood in the art, the cavity 230 may define a flow path, e.g., along which hot gas may be ingested. It is also generally understood in the art that ingestion of hot gas into the cavity 230 may decrease the efficiency of the turbomachine 10, as less hot gas is available to perform work, e.g., in a downstream stage of the turbine 18. Accordingly, the positioning of the aft hook 222 of the nozzle 202 and other components defining the cavity 230 may advantageously provide a cavity 230 that defines a tortuous flow path. For example, as illustrated in FIG. 4, the cavity 230 may include a first, radially innermost portion 232 defined between the aft sidewall 216 and an adjacent portion of the forward end 226 of shroud 206. The cavity 230 may further include a second portion 234 which extends generally orthogonal to the first portion 232, e.g., axially, between the first portion 232 and the sealing interface 236. In some embodiments, the sealing interface 236 may be generally orthogonal to the second portion 234, e.g., the sealing interface 236 may be oriented generally along the radial direction R. As used herein, terms of approximation, such as "about," "generally," or "approximately," refer to being within ten percent above or below a stated value. Further, as used herein, such terms in the context of an angle or direction include within ten degrees. For example, the second portion 234 which is generally orthogonal to the first portion 232 may form any angle within ten degrees of orthogonal, e.g., from eighty degrees to one hundred degrees, with the first portion 232.

As illustrated in FIG. 4, the shroud 206 may include a forward hook 224. The forward hook 224 of the shroud 206 may configured to engage with the aft hook 222 of the nozzle 202 to support the nozzle 202. In such embodiments, the cavity 230 may also be partially defined by an interface between the aft hook 222 of the nozzle 202 and the forward hook 224 of the shroud 206. Thus, as illustrated in FIG. 4, a further portion of the flow path defined by the cavity 230 may include the aft hook 222 of the nozzle 202 and the forward hook 224 of the shroud 206. Accordingly, positioning the aft hook 222 radially outward of the outer platform 210, axially forward of the aft sidewall 216 of the outer platform 210, and/or axially forward of the trailing edge 220 of the airfoil 212 may further serve to provide a cavity 230 that defines a tortuous flow path. Additionally, positioning the aft hook 222 axially forward of the trailing edge 220 of the airfoil 212 may advantageously provide reduced mechanical stresses and increased durability of the nozzle 202.

Still with reference to FIG. 4 and continuing outward along the radial direction R, the nozzle 202 may further include a projection 242. In such embodiments, the cavity 230 may include a radially outermost portion 240 defined between the projection 242 and the forward end 226 of the shroud 206. The radially outermost portion 240 may be generally orthogonal to the portion of the flow path defined by the aft hook 222 of the nozzle 202 and the forward hook 224 of the shroud 206.

As is generally understood in the art, the airfoil 212 of the nozzle 202 may define a wake pressure zone W aft of the trailing edge 220. The wake pressure zone W may include circumferential pressure variations around the turbine section 18. For example, the axial extent of the wake pressure zone W of the exemplary nozzle 202 is illustrated in FIG. 4. The axial extent W of the wake pressure zone may be determined, e.g., using computational fluid dynamics to analyze the nozzle 202 and in particular the airfoil 212. In some embodiments, the aft sidewall 216 of the outer platform 210 may be positioned aft of the wake pressure zone W. Such positioning of the aft sidewall 216 may advantageously minimize or avoid ingestion of hot gas into the cavity 230 driven by the wake pressure. Further, such positioning of the aft sidewall 210 aft of the wake pressure zone W may advantageously minimize or avoid physical impacts of the wake pressure on the shroud 206.

In various embodiments of the present disclosure, the nozzle 202 and the shroud 206 may be constructed of any suitable materials. In some embodiments, the nozzle 202 may include a heat-resistant super alloy material, such as a nickel-based super alloy. In some embodiments, the shroud 206 may include a stainless steel material. Both the nickel-based super alloy and the stainless steel material are suitable for the nozzle 202 and the shroud 206, respectively. However, the nickel-based super alloy material of the nozzle 202 may have superior heat-resistant properties, yet the stainless steel material may be preferable for the shroud 206 since a substantial portion of the shroud 206 is not directly in the hot gas path. The shroud 206 may therefore be provided with various cooling features as are generally understood in the art. However, aspects of the present disclosure may advantageously shield the shroud 206 from the hot gas, e.g., the outer platform 210 may include a heat-resistant super alloy and may shield the shroud 206 from hot gas. Accordingly, the need for cooling features in the shroud 206 maybe reduced.

As noted above, the foregoing example embodiments are described and illustrated with respect to a nozzle 202 and a shroud 206 of a second stage 200 of turbine 18 for simplicity and clarity only. The present disclosure is not limited to any particular stage 100, 200, and/or 300 of turbine 18, and various aspects of the example embodiments shown and described herein may be provided in any nozzle-to-shroud interface of a turbomachine.

This written description uses examples to disclose the invention, and also to enable any person skilled in the art to practice the invention. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

## Claims

1. A turbine (18) for a turbomachine (10), the turbine comprising:
a nozzle (202) comprising:
an inner platform (208);
an outer platform (210) spaced apart from the inner platform along a radial direction, the outer platform extending along an axial direction between a forward sidewall (214) and an aft sidewall (216); and
an airfoil (212) extending between the inner platform and the outer platform, the airfoil comprising a leading edge (218) at a forward end of the airfoil and a trailing edge (220) at an aft end of the airfoil;
the turbine (18) being **characterised in that** it further comprises
shroud (206) extending between a forward end (226) and an aft end, the forward end (226) of the shroud adjacent to the aft sidewall (216) of the outer platform (210);
a cavity (230) defined by an axial clearance between the nozzle and the shroud; and
a sealing interface (236) within the cavity, the sealing interface radially outward of the outer platform of the nozzle and axially forward of the aft sidewall of the outer platform of the nozzle.

2. The turbine (18) of claim 1, wherein the nozzle (202) further comprises an aft hook (222) positioned outward of the outer platform (210), the aft hook forward of the aft sidewall (216) of the outer platform.

3. The turbine (18) of claim 1, wherein the nozzle (202) further comprises an aft hook (222) positioned outward of the outer platform (210), the aft hook forward of the trailing edge (220) of the airfoil (212).

4. The turbine (18) of claim 1, 2 or 3, wherein the airfoil (212) of the nozzle (202) defines a wake pressure zone aft of the trailing edge (220), and the aft sidewall of the outer platform is positioned aft of the wake pressure zone.

5. The turbine (18) of any of claims 1 to 4, wherein the nozzle (202) comprises a heat-resistant super alloy material.

## Patentansprüche

1. Turbine (18) für eine Turbomaschine (10), wobei die Turbine umfasst:
eine Düse (202), umfassend:
eine innere Plattform (208);
eine äußere Plattform (210), die von der inneren Plattform entlang einer radialen Richtung beabstandet ist, wobei sich die äußere Plattform entlang einer axialen Richtung zwischen einer vorderen Seitenwand (214) und einer hinteren Seitenwand (216) erstreckt; und
ein Schaufelblatt (212), das sich zwischen der inneren Plattform und der äußeren Plattform erstreckt, wobei das Schaufelblatt eine Vorderkante (218) an einem vorderen Ende des Schaufelblatts und eine Hinterkante (220) an einem hinteren Ende des Schaufelblatts umfasst; wobei die Turbine (18) **dadurch gekennzeichnet ist, dass** sie ferner umfasst
eine Ummantelung (206), die sich zwischen einem vorderen Ende (226) und einem hinteren Ende erstreckt,
wobei das vordere Ende (226) der Ummantelung an die hintere Seitenwand (216) der äußeren Plattform (210) angrenzt;
einen Hohlraum (230), der durch einen axialen Zwischenraum zwischen der Düse und der Ummantelung definiert ist; und
eine Dichtungsgrenzfläche (236) innerhalb des Hohlraums, wobei die Dichtungsgrenzfläche radial außerhalb der äußeren Plattform der Düse und axial vor der hinteren Seitenwand der äußeren Plattform der Düse angeordnet ist.

2. Turbine (18) nach Anspruch 1, wobei die Düse (202) ferner einen hinteren Haken (222) umfasst, der außerhalb der äußeren Plattform (210) positioniert ist, wobei der hintere Haken vorder hinteren Seitenwand (216) der äußeren Plattform liegt.

3. Turbine (18) nach Anspruch 1, wobei die Düse (202) ferner einen hinteren Haken (222) umfasst, der außerhalb der äußeren Plattform (210) positioniert ist, wobei der hintere Haken vor der Hinterkante (220) des Schaufelblatts (212) liegt.

4. Turbine (18) nach Anspruch 1, 2 oder 3, wobei das Schaufelblatt (212) der Düse (202) eine Nachlaufdruckzone hinter der Hinterkante (220) definiert und die hintere Seitenwand der äußeren Plattform hinter der Nachlaufdruckzone angeordnet ist.

5. Turbine (18) nach einem der Ansprüche 1 bis 4, wobei die Düse (202) ein wärmebeständiges Superlegierungsmaterial umfasst.

## Revendications

1. Turbine (18) pour turbomachine (10), la turbine comprenant :
une buse (202) comprenant :
une plateforme interne (208) ;
une plateforme externe (210) espacée de la plateforme interne le long d'une direction radiale, la plateforme externe s'étendant le long d'une direction axiale entre une paroi latérale avant (214) de et une paroi latérale arrière (216) ; et
un profil aérodynamique (212) s'étendant à partir de la plateforme interne et de la plateforme externe, le profil aérodynamique comprenant un bord d'attaque (218) au niveau d'une extrémité avant du profil aérodynamique et un bord de fuite (220) au niveau d'une extrémité arrière du profil aérodynamique ;
la turbine (18) étant **caractérisée en ce qu'elle** comprend en outre :
une tôle (206) s'étendant entre une extrémité avant (226) et une extrémité arrière, l'extrémité avant (226) du déflecteur adjacent à la paroi latérale arrière (216) de la plateforme externe (210) ;
une cavité (230) définie par un jeu axial entre la buse et le déflecteur ; et
une interface d'étanchéité (236) à l'intérieur de la cavité, l'interface d'étanchéité radialement vers l'extérieur de la plateforme externe de la buse et axialement vers l'avant de la paroi latérale arrière de la plateforme externe de la buse.

2. Turbine (18) selon la revendication 1, dans laquelle la buse (202) comprend en outre un crochet arrière (222) positionné à l'extérieur de la plateforme externe (210), le crochet arrière étant en avant de la paroi latérale arrière (216) de la plateforme externe.

3. Turbine (18) selon la revendication 1, dans laquelle la buse (202) comprend en outre un crochet arrière (222) positionné à l'extérieur de la plateforme externe (210), le crochet arrière vers l'avant du bord de fuite (220) du profil aérodynamique (212).

4. Turbine (18) selon la revendication 1, 2 ou 3, dans laquelle le profil aérodynamique (212) de la buse (202) définit une zone de pression de sillage à l'arrière du bord de fuite (220), et la paroi latérale arrière de la plateforme externe est positionnée à l'arrière de la zone de pression de sillage.

5. Turbine (18) selon l'une quelconque des revendications 1 à 4, dans laquelle la buse (202) comprend un matériau en superalliage résistant à la chaleur.
